# EUROPEAN PATENT APPLICATION

(11) **EP 4 722 526 A1**
(43) Date of publication of application: **08.04.2026**
(21) Application number: 25205436.6
(22) Date of filing: 29.09.2025
(51) Int. Cl.: F02M 21/02

(54) **FUEL SUPPLY SYSTEM**

(30) Priority: 04.10.2024 JP 2024175218
(71) Applicant: Nikki Co., Ltd., Atsugi, Kanagawa 243-0801 (JP)
(72) Inventor: AIZAWA, Shutaro, Atsugi-shi, 243-0801 (JP); SUEMATSU, Yukinori, Atsugi-shi, 243-0801 (JP)
(74) Representative: Boult Wade Tennant LLP

(57) **Abstract**

A fuel supply system (100) for supplying gas fuel to an engine (6) includes: an electronically controlled regulator (3, 3A, 3B) configured to reduce a pressure of gas fuel that has been introduced to a set pressure to discharge the gas fuel; a pressure sensor (7) configured to detect a fluid pressure of the gas fuel after pressure reduction; and an electromagnetic relief valve (8) that is a normally-open type and is provided downstream of a pressure adjusting valve (20A, 20B) of the electronically controlled regulator (3, 3A, 3B). The electromagnetic relief valve (8) is opened and vents the gas fuel to an outside of a fuel supply line for the gas fuel when the fluid pressure detected by the pressure sensor (7) reaches a pressure threshold or when the electromagnetic relief valve (8) is not energized.

## Description

### BACKGROUND

### Technical Field

The present invention relates to a fuel supply system for supplying gas fuel to an engine.

### Related Art

Since vehicle gas fuel is stored in a tank in a high-pressure liquid state, it is necessary to reduce the pressure to a predetermined pressure to supply the gas fuel to an engine in a gas state. As a regulator for pressure reduction/adjustment, an electronically controlled pressure control device using an electromagnetic valve, such as a device described in JP 2014-005729 A, is known.

The pressure control device described in JP 2014-005729 A includes two solenoids, a solenoid for a main stop valve and a solenoid for a pressure reducing valve, and can control the pressure of gas fuel to be discharged by continuously changing a current value.

### SUMMARY

Meanwhile, the pressure control device of JP 2014-005729 A has a structure in which the valves are closed when an engine is stopped (when not energized), and a fuel tank valve provided in a fuel tank functions as a safety device. Thus, if the fuel tank valve malfunctions, the gas fuel at high pressure flows into the pressure control device, and the excessive fluid pressure causes damage or failure of the pressure control device or further downstream equipment, which may create a serious issue.

The present invention is intended to solve the above issues, and an object thereof is to provide a fuel supply system for supplying gas fuel to an engine of a vehicle or the like, in which a fluid pressure of the gas fuel to be discharged can be adjusted under electronic control and the fluid pressure of the gas fuel can be safely released when a failure such as energization fault occurs.

The present invention made to solve the above problem is a fuel supply system for supplying gas fuel to an engine, the fuel supply system including: an electronically controlled regulator configured to reduce a pressure of gas fuel that has been introduced to a set pressure to discharge the gas fuel; a pressure sensor configured to detect a fluid pressure of the gas fuel after pressure reduction; and an electromagnetic relief valve that is a normally-open type and is provided downstream of a pressure adjusting valve of the electronically controlled regulator, wherein the electromagnetic relief valve is opened and vents the gas fuel to an outside of a fuel supply line for the gas fuel when the fluid pressure detected by the pressure sensor reaches a pressure threshold or when the electromagnetic relief valve is not energized.

According to the present invention, an electromagnetic relief valve can safely relieve a fluid pressure.

### BRIEF DESCRIPTION OF DRAWINGS

FIG. 1 is a schematic configuration diagram illustrating an example of a fuel supply system according to the present invention;
FIG. 2 is a longitudinal sectional view illustrating a valve closed state of a first embodiment of an electronically controlled regulator according to the present invention;
FIG. 3 is a longitudinal sectional view illustrating a valve open state of the first embodiment of the electronically controlled regulator according to the present invention;
FIG. 4 is a functional block diagram of the fuel supply system to which the first embodiment or a second embodiment of the electronically controlled regulator according to the present invention is applied;
FIG. 5 is a longitudinal sectional view illustrating a valve closed state of the second embodiment of the electronically controlled regulator according to the present invention;
FIG. 6 is a longitudinal sectional view illustrating a valve open state of the second embodiment of the electronically controlled regulator according to the present invention; and
FIG. 7 is a sectional view taken along line A-A of FIG. 6.

### DETAILED DESCRIPTION

Hereinafter, embodiments of the present invention will be described with reference to the drawings.

### <System Configuration>

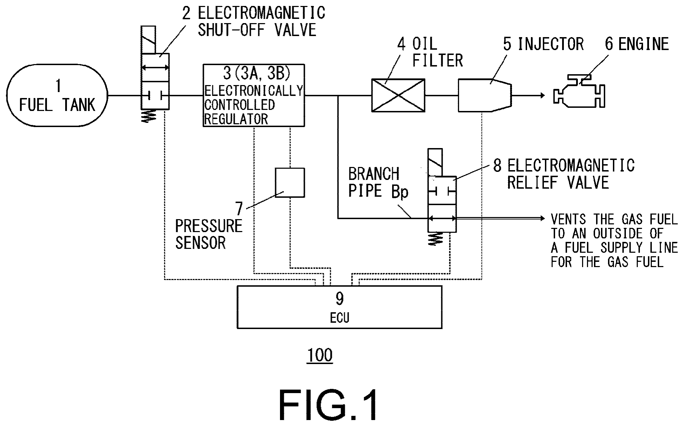

FIG. 1 is a schematic configuration diagram illustrating an example of a fuel supply system 100 according to the present invention. In FIG. 1, paths indicated by solid lines represent a fuel supply line for gas fuel, and paths indicated by dotted lines represent signal communication lines. In the following description, the term "outside of the system" means the outside of the fuel supply line for gas fuel, and is used, for example, in the context of venting to the atmosphere outside a vehicle.

The fuel supply system 100 is a system for supplying gas fuel to an engine of a vehicle or the like, and includes a fuel tank 1 that stores gas fuel such as CNG, LNG, LPG, and hydrogen gas, an electromagnetic shut-off valve 2, an electronically controlled regulator 3, an oil filter 4, an injector 5, a pressure sensor 7, an electromagnetic relief valve 8, and an ECU 9.

The gas fuel delivered from the fuel tank 1 passes through the electromagnetic shut-off valve 2, the electronically controlled regulator 3, the oil filter 4, and the injector 5 in that order, and is supplied to the engine 6. A pressure reducing means may be further provided between the fuel tank 1 and the electronically controlled regulator 3 or between the electronically controlled regulator 3 and the injector 5 (not illustrated).

The electromagnetic shut-off valve 2 is a normally-closed electromagnetic valve provided upstream of the electronically controlled regulator 3. In a normal state when the engine is driven, the electromagnetic shut-off valve 2 is supplied with power to maintain a valve open state.

The electronically controlled regulator 3, which is driven by an electronically controlled electric motor, reduces a pressure of the introduced gas fuel to a set pressure to discharge the gas fuel.

The oil filter 4 is a filter for removing precipitated oil.

The injector 5 is connected to a fuel supply pipe for the engine 6 and a cylinder of the engine 6, and injects the gas fuel after the pressure reduction.

The pressure sensor 7 is disposed on the downstream side of a pressure adjusting valve of the electronically controlled regulator 3, and detects a fluid pressure of the gas fuel after the pressure reduction.

The electromagnetic relief valve 8 is a normally-open electromagnetic valve provided downstream of the electronically controlled regulator 3. In the normal state when the engine is driven, the electromagnetic relief valve 8 is supplied with power to maintain a valve closed state. The electromagnetic relief valve 8 is opened and vents the gas fuel to the outside of the system to relieve the pressure when the fluid pressure detected by the pressure sensor 7 exceeds a predetermined pressure threshold or when the engine is stopped (when not energized). The pressure threshold is set to a pressure range higher than the set pressure of the gas fuel.

In the example illustrated in FIG. 1, the electromagnetic relief valve 8 is disposed in a branch pipe Bp provided downstream of the electronically controlled regulator 3 and uses a two-position two-port control valve that switches between opening and closing. However, for example, a three-port control valve may be used. When a three-port control valve is used, the branch pipe is not required to branch the path in advance, leading to space saving.

The ECU 9 is an electronic control unit, and is a device connected to the electronically controlled regulator 3, the injector 5, and other devices to perform control and the like.

### <Description of Operation>

Hereinafter, operation of the present invention will be described.

First, as a first comparative example, there will be described below an issue in the case of using a normally-closed mechanical safety valve using, for example, a spring, a diaphragm, or the like.

In the case of using the normally-closed mechanical safety valve, when a fluid pressure reaches a predetermined pressure threshold, the mechanical safety valve automatically operates and opens due to the fluid pressure, thereby venting gas fuel to the outside of the system to relieve the fluid pressure. Then, when the fluid pressure becomes a certain level or less, the mechanical safety valve automatically returns to the valve closed state by a biasing means such as a spring or a diaphragm.

Such a mechanical safety valve is assumed to operate in an emergency, and does not operate and does not open during normal operation when the fluid pressure is below the pressure threshold. Thus, for example, it is not possible to perform a valve opening operation in order to relieve the fluid pressure of remaining gas fuel when an engine is stopped (when not energized).

Next, as a second comparative example, an issue in the case of using a normally-closed electromagnetic relief valve will be described below.

In the case of using the normally-closed electromagnetic safety valve, when a fluid pressure reaches a predetermined pressure threshold, the electromagnetic safety valve is energized and a solenoid is excited to open the valve, thereby venting gas fuel to the outside of the system to relieve the fluid pressure. Then, when the fluid pressure becomes a certain level or less, the electromagnetic safety valve is de-energized and returns to the valve closed state. In addition, when an engine is stopped (when not energized), the electromagnetic relief valve can be opened to relieve the fluid pressure of remaining gas fuel.

However, if an electrical defect such as disconnection occurs, the electromagnetic relief valve is inoperative and remains in the valve closed state. When the electromagnetic relief valve is in the valve closed state, the function as a relief valve is disabled, resulting in the inability to relieve the fluid pressure of the gas fuel. Thus, if the electronically controlled regulator has several defects such as pressure adjustment fault and valve leakage, excessive fluid pressure load may cause a serious issue such as damage or failure of the electronically controlled regulator or downstream equipment. In addition, the normally-closed electromagnetic relief valve requires a relay circuit and an external power supply for opening the electromagnetic relief valve when the engine is stopped (when not energized).

In contrast, operation in the case of using a normally-open electromagnetic relief valve as in the present invention will be described below.

In the case of using the normally-open electromagnetic safety valve, when a fluid pressure reaches a predetermined pressure threshold, the electromagnetic safety valve is de-energized and operates to open, thereby venting gas fuel to the outside of the system to relieve the fluid pressure. Then, when the fluid pressure becomes a certain level or less, the electromagnetic safety valve is energized and a solenoid is excited to return to the valve closed state. In addition, when an engine is stopped (when not energized), the electromagnetic relief valve can be opened to relieve the fluid pressure of remaining gas fuel.

When the normally-open electromagnetic relief valve is used, even if an electrical defect such as disconnection occurs, the electromagnetic relief valve automatically operates to open. By passing through the opened electromagnetic relief valve, the gas fuel is safely and quickly vented to the outside of the system.

Since the normally-open electromagnetic relief valve can reliably exhibit the function as a relief valve in this manner, even if the electronically controlled regulator has several defects such as pressure adjustment fault and valve leakage, it is possible to relieve the fluid pressure of the gas fuel and avoid damage and failure of the electronically controlled regulator or downstream equipment.

Furthermore, using the normally-open electromagnetic relief valve eliminates the need to configure a relay circuit and an external power supply unlike the normally-closed electromagnetic relief valve. Therefore, simplified configuration and cost saving can be realized.

In the fuel supply system 100 illustrated in FIG. 1, the normally-closed electromagnetic shut-off valve is provided upstream of the electronically controlled regulator. The electromagnetic shut-off valve is de-energized and operates to close when the fluid pressure reaches a predetermined pressure threshold or when the engine is stopped (when not energized).

When the normally-closed electromagnetic shut-off valve is used, even if an electrical defect such as disconnection occurs, the electromagnetic shut-off valve automatically operates to close. Upon closing the electromagnetic shut-off valve, the fluid supply to the electronically controlled regulator is shut off, so that venting of the gas fuel from the electromagnetic relief valve is also stopped.

### <Electronically Controlled Regulator>

The electronically controlled regulator according to the present invention will be described below.

### <<First Embodiment of Electronically Controlled Regulator>>

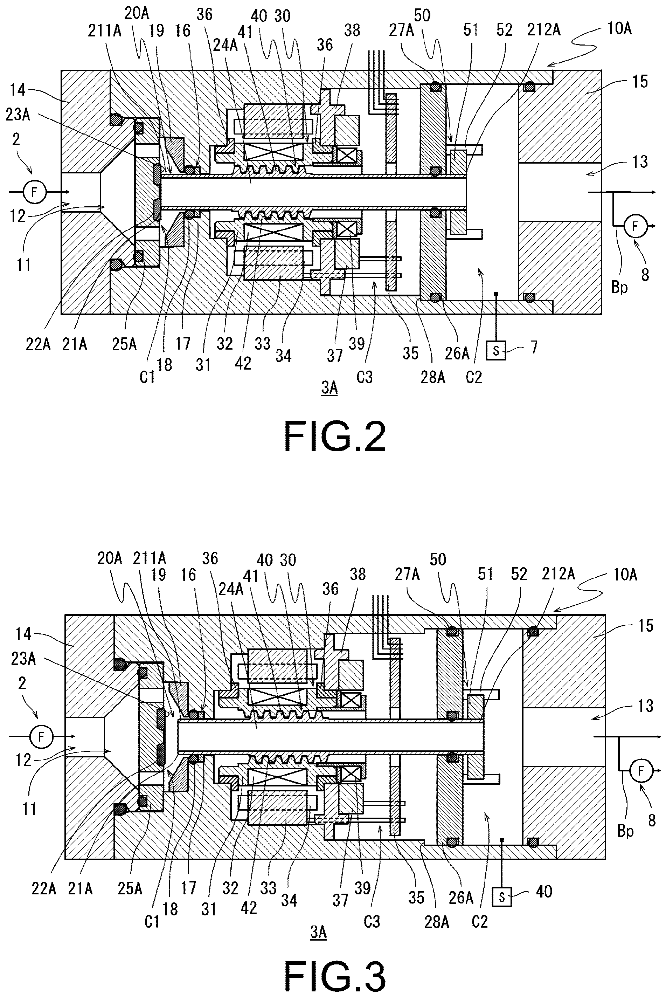

FIGS. 2 and 3 are diagrams illustrating a first embodiment of the electronically controlled regulator. FIG. 2 illustrates the valve closed state of an electronically controlled regulator 3A, and FIG. 3 illustrates the valve open state of the electronically controlled regulator 3A.

The electronically controlled regulator 3A is a pressure reducing device that reduces a pressure of gas fuel, which is a high-pressure fluid, to a predetermined pressure in a gas fuel supply system.

The electronically controlled regulator 3A includes a body 10A having a fluid passage 11 through which a fluid passes, a pressure adjusting valve 20A provided in the fluid passage 11, and an electronically controlled electric motor 30. The pressure sensor 7, the electromagnetic shut-off valve 2, and the electromagnetic relief valve 8 are connected to the electronically controlled regulator 3A.

The body 10A has a cylindrical shape, and the fluid passage 11 has a fluid introduction port 12 at one end and a fluid discharge port 13 at the other end. An inlet cover 14 is attached to the fluid introduction port 12 side, and an outlet cover 15 is attached to the fluid discharge port 13 side.

The pressure adjusting valve 20A is provided in the fluid passage 11 and separates a primary pressure chamber C1 on the fluid introduction port 12 side and a secondary pressure chamber C2 on the fluid discharge port 13 side. In addition, a pressure control chamber C3 for operating the pressure adjusting valve 20A to reduce and adjust a pressure of the fluid to be discharged to a set pressure is provided between the primary pressure chamber C1 and the secondary pressure chamber C2.

The pressure adjusting valve 20A includes a tubular valve body 21A capable of reciprocating in the axial direction, an annular valve seat 22A having a seat surface 23A with which the valve body 21A can come into close contact, and a discharge pressure adjusting mechanism that adjusts a discharge pressure by reciprocating the valve body 21A and changing the distance between the valve body 21A and the valve seat 22A.

The discharge pressure adjusting mechanism comprises the electric motor 30 including a rotor 31, a motor driver 35 that drives and controls the electric motor 30, and a valve body moving structure 40. Using the electronically controlled electric motor 30 as a drive source, the valve body 21A is reciprocated with respect to the seat surface 23A of the valve seat 22A in the axial direction between a valve closed position (FIG. 2) where the valve body 21A is in close contact with the seat surface 23A and a valve open position (FIG. 3) where the valve body 21A is separated from the seat surface 23A to change an opening area, and the pressure of the fluid to be discharged is automatically adjusted to be equal to the set pressure.

The valve body 21A is a tubular member, and has a communication passage 24A allowing the fluid to pass therethrough. The valve body 21A has a distal end 211A at a side end that seats on the valve seat 22A, and a rear end 212A at the opposite side end.

When the valve body 21A is separated from the seat surface 23A of the valve seat 22A and the valve is opened, the primary pressure chamber C1 on the fluid introduction port 12 side and the secondary pressure chamber C2 on the fluid discharge port 13 side communicate with each other through the communication passage 24A inside the valve body 21A, and the gas fuel moves from the primary pressure chamber C1 to the secondary pressure chamber C2.

On the other hand, when the valve body 21A is seated on the seat surface 23A of the valve seat 22A and the valve is closed, the fluid movement from the primary pressure chamber C1 to the secondary pressure chamber C2 is restricted.

The fluid passage 11 has a valve body holder 16 at an intermediate position thereof for holding the valve body 21A. An annular collar 17 and a seal ring 18 located closer to the primary pressure chamber C1 than the collar 17 are attached to the valve body holder 16.

The collar 17 has an inner diameter slightly larger than an outer diameter of the valve body 21A, and has a role in guiding the reciprocating motion of the valve body 21A in the axial direction while preventing direct contact between the valve body 21A and the body 10A. The collar 17 can be formed of, for example, synthetic resin, preferably a material having excellent slipperiness, such as PTFE in particular.

The seal ring 18 has a role in providing an airtight seal between the valve body holder 16 and the valve body 21A. The collar 17 and the seal ring 18 are held so as not to come off from the valve body holder 16 by a retaining member 19 attached to the primary pressure chamber C1 side.

The valve seat 22A is fixed to a disk-shaped valve seat holding member 25A by means such as adhesion or insert molding. The valve seat holding member 25A is fitted between the inlet cover 14 and the body 10A, and has a through hole formed around the valve seat 22A to allow the gas fuel to pass therethrough.

A piston 26A that receives the fluid pressure in the secondary pressure chamber C2 is fixed in the vicinity of the rear end 212A of the valve body 21A, and a seal ring 27A is attached to the outer periphery of the piston 26A. When the pressure adjusting valve 20A is closed, the piston 26A comes into contact with a stepped portion 28A formed inside the body 10A, so that further movement in the valve closing direction is restricted.

When the electric motor 30 is stopped and the valve is closed, the fluid pressure in the secondary pressure chamber C2 received by the piston 26A is converted into a pressure load in a direction of pressing the valve body 21A against the seat face 23A, which prevents the occurrence of a slow leak through the pressure adjusting valve 20A due to a decrease in a pressing force against the seat face 23A of the valve seat 22A.

The electric motor 30 includes the rotor 31 provided with magnets 32 and a stator 33 that supports windings 34 in a wound state, and is controlled by the motor driver 35. As the electric motor, for example, an AC servomotor or a DC brushless motor can be used.

The electric motor 30 is housed in the pressure control chamber C3, and the pressure control chamber C3 is isolated from the primary pressure chamber C1 and the secondary pressure chamber C2 in an airtight manner. In the electric motor 30, the substantially cylindrical rotor 31 provided with a plurality of magnets 32 arranged on the outer peripheral side so as to face the stators 33 is rotatably disposed with its central axis coincident with that of the valve body 21A.

The rotor 31 is pivotally supported by two slide bearings 36 disposed on both upper and lower end sides thereof, and is rotated by a magnetic force generated by energizing the windings 34 facing the magnets 32 to drive the electric motor 30. Note that, a self-lubricating resin having excellent surface lubrication performance is used as a material of the slide bearings 36 to be able to ensure smooth rotation of the rotor 31 for a long period of time without requiring regular lubrication in a friction portion thereof.

A cover 38 for axial alignment of the rotor 31 and attachment of a magnetic pole position sensor 37 is disposed above the stator 33, and a magnet 39 is disposed above the rotor 31. The magnetic pole position sensor 37 can detect a rotational position of the rotor 31 together with the magnet 39 and a magnetic pole generated by current flowing through the stator 33.

The valve body moving structure 40 includes a male screw portion 41 formed on the outer peripheral surface of the valve body 21A, a female screw portion 42 formed on the inner peripheral surface of the rotor 31 to be meshed with the male screw portion 41, and a rotation stopper 50 provided on the rear end 212A side of the valve body 21A. The valve body moving structure 40 is a lead screw structure that converts a rotational motion of the electric motor 30 into a linear motion of the valve body 21A.

The rotation stopper 50 includes an anti-rotation protrusion 51 protruding outward in the circumferential direction at the rear end 212A of the valve body 21A, and anti-rotation guides 52 protruding from the piston 26A in the axial direction (direction toward the fluid discharge port 13) so as to sandwich the anti-rotation protrusion 51.

When the electric motor 30 is driven, the rotational motion of the rotor 31 is transmitted to the valve body 21A via the female screw portion 42 and the male screw portion 41. The rotational motion of the valve body 21A is restricted by the contact between the anti-rotation protrusion 51 on the valve body 21A side and the anti-rotation guides 52 on the piston 26A side, and is converted into the linear motion in the axial direction.

At this time, a radial load of the seal ring 27A attached to the outer periphery of the piston 26A is greater than motor torque, and in a pressurized state, a load in the direction of pressing the valve body 21A against the seat surface 23A of the valve seat 22A is further applied, which prevents the piston 26A and the valve body 21A from rotating at the same time.

The pressure sensor 7 detects the fluid pressure on the secondary pressure chamber C2 side. The installation position of the pressure sensor is not limited to the inside of the secondary pressure chamber C2. For example, the pressure sensor may be installed at another location downstream of the fluid discharge port 13 or the like and a numerical value of the fluid pressure input to the ECU of the vehicle may be used.

In a pressure adjusting structure according to the present embodiment, the electric motor 30 is controlled based on the fluid pressure on the secondary pressure chamber C2 side detected by the pressure sensor 7, thereby operating the valve body moving structure 40 to operate the pressure adjusting valve 20A. Then, by changing a lift amount of the valve body 21A and changing a flow rate of the fluid passing through the communication passage 24A from the primary pressure chamber C1 to the secondary pressure chamber C2, the fluid pressure of the gas fuel to be discharged is automatically adjusted to be equal to the set pressure.

As described above, the electronically controlled regulator 3A according to the present embodiment employs a method in which, based on the discharge pressure detected by the pressure sensor 7, the electric motor 30 is driven and controlled so that the valve body moving structure 40 causes the valve body 21A to reciprocate in the axial direction to open and close the pressure adjusting valve 20A (change the opening area), thereby adjusting the discharge pressure. Therefore, it is possible to handle various required discharge pressures and required flow rates with one product without requiring replacement of parts.

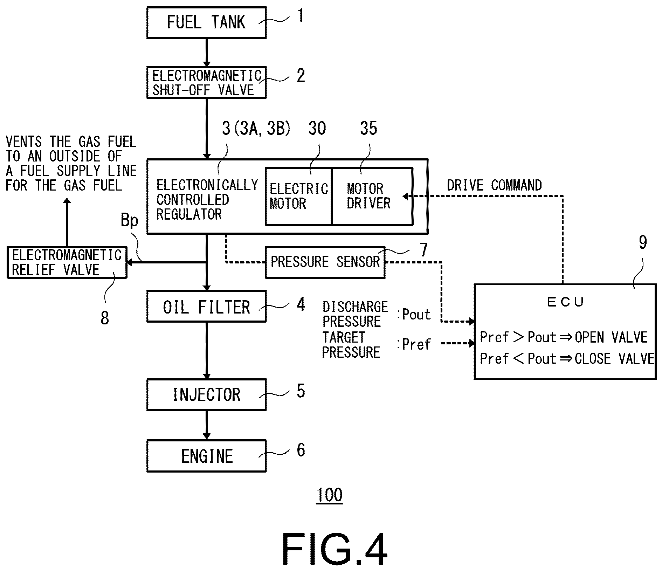

Next, operation according to the present embodiment will be described with reference to the sectional views of FIGS. 2 to 3 and the functional block diagram of FIG. 4.

As illustrated in FIG. 4, during normal operation of the electronically controlled regulator 3A, a drive command is input from the ECU 9, which is an electronic control means, to the motor driver 35.

At this time, in a case where the relationship between a target pressure (Pref) and the discharge pressure (Pout) detected by the pressure sensor 7 satisfies Pref > Pout, current is applied to the windings 34 of the stator 33 so that the rotor 31 rotates in a direction to open the valve body 21A. When the rotor 31 rotates in the direction to open the valve body 21A, the valve body moving structure 40 causes the valve body 21A to move in the valve opening direction, and the valve body 21A is separated from the seat surface 23A of the valve seat 22A, resulting in the valve open state as illustrated in FIG. 3.

On the other hand, in a case where the relationship between the target pressure (Pref) and the discharge pressure (Pout) satisfies Pref < Pout, current is applied to the windings 34 of the stator 33 so that the rotor 31 rotates in a direction to close the valve body 21A. When the rotor 31 rotates in the direction to close the valve body 21A, the valve body moving structure 40 causes the valve body 21A to move in the valve closing direction, and the valve body 21A comes into close contact with the seat surface 23A of the valve seat 22A, resulting in the valve closed state as illustrated in FIG. 2.

By executing the above control to open and close the pressure adjusting valve 20A (change the opening area), the pressure of the fluid to be discharged can be maintained at the predetermined set pressure. The set pressure can be optionally changed according to use conditions of the regulator.

Then, for example, when the fluid pressure detected by the pressure sensor 7 exceeds the pressure threshold or when the engine is stopped (when not energized), the electromagnetic relief valve 8 is opened and vents the gas fuel discharged from the fluid discharge port 13 to the outside to relieve the fluid pressure.

In addition, for example, when the fluid pressure detected by the pressure sensor 7 exceeds the pressure threshold or when the engine is stopped (when not energized), the electromagnetic shut-off valve 2 is also closed to shut off the introduction of the gas fuel from the fluid introduction port 12.

Upon closing the electromagnetic shut-off valve 2, the fluid supply to the electronically controlled regulator 3A is shut off, so that venting of the gas fuel from the electromagnetic relief valve 8 is also stopped.

### <<Second Embodiment of Electronically Controlled Regulator>>

A second embodiment of the electronically controlled regulator will be described below. The same components as those of the first embodiment of the electronically controlled regulator are denoted by the same reference signs, and the description thereof will be omitted.

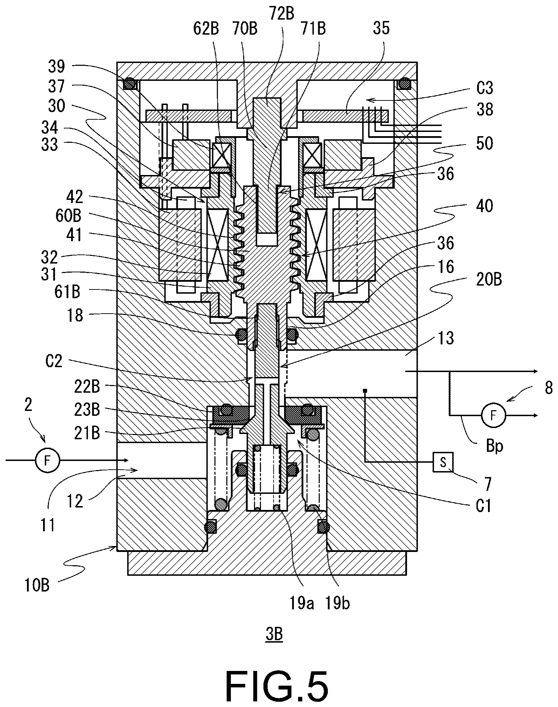

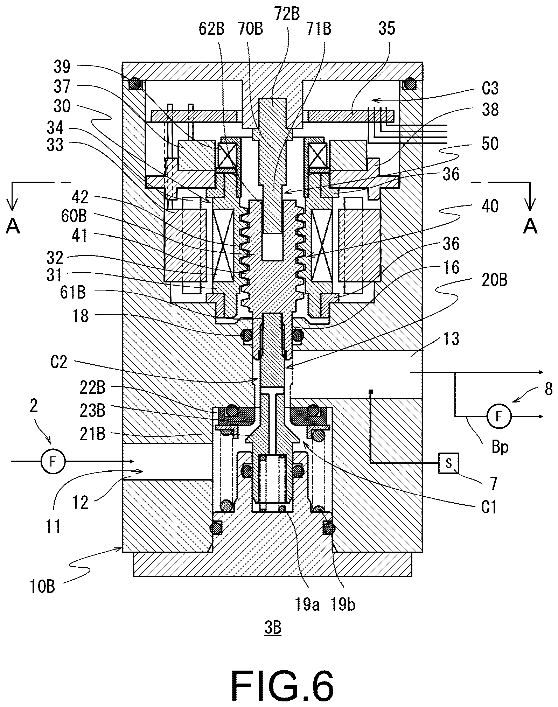

FIG. 5 illustrates a valve closed state of a second electronically controlled regulator 3B of the present invention, and FIG. 6 illustrates a valve open state of the electronically controlled regulator 3B.

Similarly to the electronically controlled regulator 3A, the electronically controlled regulator 3B is a pressure reducing device that reduces a pressure of gas fuel, which is a high-pressure fluid, to a predetermined pressure in a gas fuel supply system.

The electronically controlled regulator 3B includes a body 10B having a fluid passage 11 through which gas fuel passes, a pressure adjusting valve 20B provided in the fluid passage 11, and an electronically controlled electric motor 30. The pressure sensor 7, the electromagnetic shut-off valve 2, and the electromagnetic relief valve 8 are connected to the electronically controlled regulator 3B.

The body 10B has a cylindrical shape, and the fluid passage 11 has a fluid introduction port 12 at one end and a fluid discharge port 13 at the other end.

The pressure adjusting valve 20B is provided in the fluid passage 11 and separates a primary pressure chamber C1 on the fluid introduction port 12 side and a secondary pressure chamber C2 on the fluid discharge port 13 side. In the body 10B, a pressure control chamber C3 for operating the pressure adjusting valve 20B to reduce and adjust a fluid pressure of the gas fuel to be discharged to a set pressure is provided to be isolated from the primary pressure chamber C1 and the secondary pressure chamber C2.

The pressure adjusting valve 20B includes a rod-shaped valve body 21B capable of reciprocating in the axial direction, an annular valve seat 22B having, at its center, a valve hole 23B that can be blocked by the valve body 21B, and a discharge pressure adjusting mechanism that adjusts a discharge pressure by reciprocating the valve body 21B and changing the distance between the valve body 21B and the valve seat 22B.

The discharge pressure adjusting mechanism comprises the electric motor 30 including a rotor 31, a motor driver 35 that drives and controls the electric motor 30, and a valve body moving structure 40.

Using the electronically controlled electric motor 30 as a drive source, the valve body 21B is reciprocated in the axial direction between a valve closed position (FIG. 5) where the valve hole 23B of the valve seat 22B is blocked by the valve body 21B and a valve open position (FIG. 6) where the valve body 21B is separated from the valve hole 23B of the valve seat 22B to change an opening area, and the pressure of the fluid to be discharged is automatically adjusted to be equal to the set pressure.

The fluid passage 11 has a valve body holder 16 at an intermediate position thereof for holding the valve body 21B. A seal ring 18 is attached to the valve body holder 16.

The seal ring 18 is engaged with the valve body 21B to isolate the pressure control chamber C3 from the primary pressure chamber C1 and the secondary pressure chamber C2 in an airtight manner.

When the valve body 21B is separated from the valve hole 23B of the valve seat 22B and the valve is opened, the primary pressure chamber C1 on the fluid introduction port 12 side and the secondary pressure chamber C2 on the fluid discharge port 13 side communicate with each other through the valve hole 23B, and the gas fuel moves from the primary pressure chamber C1 to the secondary pressure chamber C2.

On the other hand, when the valve body 21B blocks the valve hole 23B of the valve seat 22B and the valve is closed, the fluid movement from the primary pressure chamber C1 to the secondary pressure chamber C2 is restricted.

The valve body 21B is pushed up by a spring 29a so that the valve body 21B blocks the valve hole 23B of the valve seat 22B. The valve seat 22B is pressed and held by a spring 29b.

The valve body moving structure 40 includes a male screw portion 41 formed on the outer peripheral surface of a motion shaft 60B, a female screw portion 42 formed on the inner peripheral surface of the rotor 31 to be meshed with the male screw portion 41, and a rotation stopper 50 using an anti-rotation shaft 70B slidably inserted in the motion shaft 60B. The valve body moving structure 40 is a lead screw structure that converts a rotational motion of the electric motor 30 into a linear motion of the valve body 21B.

The motion shaft 60B has, at one end thereof, a connecting hole 61B in which one end of the valve body 21B is inserted, and is coaxially connected to the valve body 21B. The valve body 21B and the motion shaft 60B can be fixed to each other by, for example, screw fitting.

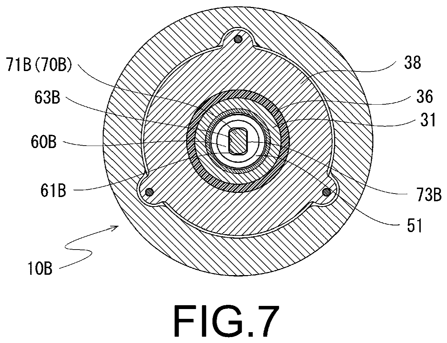

The motion shaft 60B has, at the end opposite to the connecting hole 61B, an insertion hole 62B whose inner peripheral surface has a flat portion 63B. The anti-rotation shaft 70B having a proximal end 72B fixed to the body 10B and a distal end 71B whose outer peripheral surface has a flat portion 73B to be inserted in the insertion hole 62B slidably in the axial direction, thereby constituting the rotation stopper 50 (see FIG. 7).

That is, the rotational motion of the motion shaft 60B is restricted by close contact between the flat portions of the motion shaft 60B and the anti-rotation shaft 70B, and is converted into the linear motion in the axial direction, resulting in movement of the valve body 21B connected to the motion shaft 60B.

Next, operation according to the present embodiment will be described with reference to the sectional views of FIGS. 5 to 6 and the functional block diagram of FIG. 4.

As illustrated in FIG. 4, during normal operation of the electronically controlled regulator 3B, a drive command is input from the ECU 9, which is an electronic control means, to the motor driver 35.

At this time, in a case where the relationship between a target pressure (Pref) and the discharge pressure (Pout) detected by the pressure sensor 7 satisfies Pref > Pout, current is applied to the windings 34 of the stator 33 so that the rotor 31 rotates in a direction to open the valve body 21B. When the rotor 31 rotates in the direction to open the valve body 21B, the valve body moving structure 40 causes the valve body 21B to move in the valve opening direction, and the blocking of the valve hole 23B of the valve seat 22B by the valve body 21B is released, resulting in the valve open state as illustrated in FIG. 6.

On the other hand, in a case where the relationship between the target pressure (Pref) and the discharge pressure (Pout) satisfies Pref < Pout, current is applied to the windings 34 of the stator 33 so that the rotor 31 rotates in a direction to close the valve body 21B. When the rotor 31 rotates in the direction to close the valve body 21B, the valve body moving structure 40 causes the valve body 21B to move in the valve closing direction, and the valve body 21B blocks the valve hole 23B of the valve seat 22B, resulting in the valve closed state as illustrated in FIG. 5.

By executing the above control to open and close the pressure adjusting valve 20B (change the opening area), the pressure of the fluid to be discharged can be maintained at the predetermined set pressure. The set pressure can be optionally changed according to use conditions of the regulator.

As described above, the electronically controlled regulator 3A, 3B employs a method in which, based on the discharge pressure detected by the pressure sensor 7, the electric motor 30 is driven and controlled so that the valve body 21A, 21B is reciprocated in the axial direction to open and close the pressure adjusting valve 20A, 20B (change the opening area), thereby adjusting the discharge pressure. This makes it possible to handle various required discharge pressures and required flow rates with one product without requiring replacement of parts.

The electronically controlled regulator 3A of the first embodiment and the electronically controlled regulator 3B of the second embodiment have a reversed relationship in the respective structures of the valve body and the valve seat. However, the present invention is applicable to the both embodiments.

As described above, the present invention can provide a fuel supply system in which using an electronically controlled regulator makes it possible to automatically maintain the discharge pressure at various specified pressures while handling a change in a required flow rate, and using a normally-open electromagnetic relief valve allows, even if a defect such as energization fault occurs, safe switching to the valve open state for relieving the fluid pressure so that damage and failure of equipment can be avoided.

## Claims

1. A fuel supply system (100) for supplying gas fuel to an engine (6), the fuel supply system (100) comprising:
an electronically controlled regulator (3, 3A, 3B) configured to reduce a pressure of gas fuel that has been introduced to a set pressure to discharge the gas fuel;
a pressure sensor (7) configured to detect a fluid pressure of the gas fuel after pressure reduction; and
an electromagnetic relief valve (8) that is a normally-open type and is provided downstream of a pressure adjusting valve (20A, 20B) of the electronically controlled regulator (3, 3A, 3B), wherein
the electromagnetic relief valve (8) is opened and vents the gas fuel to an outside of a fuel supply line for the gas fuel when the fluid pressure detected by the pressure sensor (7) reaches a pressure threshold or when the electromagnetic relief valve (8) is not energized.

2. The fuel supply system (100) according to claim 1, wherein
the electronically controlled regulator (3, 3A, 3B) includes:
a body (10A, 10B) in which a fluid passage (11) is formed, the fluid passage (11) having a fluid introduction port (12) at one end and a fluid discharge port (13) at another end;
the pressure adjusting valve (20A, 20B) that is provided in the fluid passage (11) and separates a primary pressure chamber (C1) on a side with the fluid introduction port (12) and a secondary pressure chamber (C2) on a side with the fluid discharge port (13); and
an electric motor (30) that is electronically controlled, and
the pressure adjusting valve (20A, 20B) includes:
a valve body (21A, 21B) capable of reciprocating in an axial direction;
a valve seat (22A, 22B) disposed to face the valve body (21A, 21B); and
a discharge pressure adjusting mechanism that adjusts the pressure of the gas fuel to the set pressure by reciprocating the valve body (21A, 21B) in the axial direction using the electric motor (30) as a drive source and changing a distance between the valve body (21A, 21B) and the valve seat (22A, 22B).

3. The fuel supply system (100) according to claim 2, wherein
the discharge pressure adjusting mechanism includes:
a valve body moving structure (40) that includes a male screw portion (41), a female screw portion (42), and a rotation stopper (50), and converts a rotational motion of the electric motor (30) into a linear motion of the valve body (21A, 21B),
the male screw portion (41) is formed on an outer peripheral surface of the valve body (21A, 21B) or an outer peripheral surface of a motion shaft (60B) connected to the valve body (21A, 21B), and
the female screw portion (42) is formed on an inner peripheral surface of a rotor (31) forming part of the electric motor (30).

4. The fuel supply system (100) according to claim 2, wherein
the valve seat (22A, 22B) is an annular or disk-shaped member, and
the valve body (21A, 21B) is a tubular member having a communication passage (24A) that allows the primary pressure chamber (C1) and the secondary pressure chamber (C2) to communicate with each other when the pressure adjusting valve (20A, 20B) is opened.

5. The fuel supply system (100) according to claim 2, wherein
the valve seat (22A, 22B) is an annular member having a valve hole (23B), and
the valve body (21A, 21B) is a rod-shaped member that blocks the valve hole (23B) when the pressure adjusting valve (20A, 20B) is closed.

6. The fuel supply system (100) according to claim 1, 2, 3, 4, or 5, comprising:
an electromagnetic shut-off valve (2) that is a normally-closed type and is located upstream of the electronically controlled regulator (3, 3A, 3B), wherein
the electromagnetic shut-off valve (2) is closed when the fluid pressure detected by the pressure sensor (7) reaches the pressure threshold or when the electromagnetic shut-off valve (2) is not energized.
